# EUROPEAN PATENT APPLICATION

(11) **EP 2 204 790 A1**
(43) Date of publication of application: **07.07.2010**
(21) Application number: 10150146.8
(22) Date of filing: 05.01.2010
(51) Int. Cl.: G09F 3/03, G09F 3/00

(54) **Tamper evident fastening device**

(30) Priority: 06.01.2009 GB 0900079
(71) Applicant: ID&C Limited, Turnbridge Wells, Kent TN2 3GP (GB)
(72) Inventor: Wilkey, Christopher, Tunbridge Wells Kent TN2 3GP (GB)
(74) Representative: Clarke, Lionel Paul

(57) **Abstract**

A tamper evident fastening device (1) suitable for use with a wristband (4), said device comprising a pair of members (1a,1b), a first member (1a) having a spike-like part (7), and a second member (1b) having spike-engaging means (8), characterized in that one or both of the spike-like part (7) or the engaging means (8) is frangibly connected to its respective member (1a,1b) such that in use, when the spike-engaging means (8) engages the spike-like part (7), such that the device (1) is in a closed state, an attempt to open the closed device (1) causes one or both of the frangible connections to break, thereby providing evidence of tampering.

## Description

The present invention relates to a tamper evident fastening device and particularly to a fastening device adapted for use with a wristband.

### BACKGROUND OF INVENTION

Identification bands are commonly used in many applications. For example: collars may be used to identify pets in a veterinary surgery; and wristbands are used for the identification of human patients (particularly new born babies) in hospitals. In the latter case, the band is appropriately positioned and fixed around the patient's wrist as early as possible after arrival at a hospital. Such bands are commonly fastened by a strong adhesive or by a non-releasable stud. This is intended to ensure that the band cannot be easily removed and replaced without providing clear evidence of tampering and that the band cannot be re-used. It is usually necessary to cut the band in order to remove it from the patient when it is no longer required.

More recently, wristbands have been used in the entertainment industry, particularly at large concerts or sporting events. For example, wristbands may be used to implement non-transferable ticketing, to assist in crowd control, to identify advance payers, to control access to VIP areas and to eliminate lost tickets.

The use of wristbands for these purposes relies on them being difficult to reproduce and difficult to remove without visible damage. It is also preferable that the wristbands be highly visible and made to a variety of designs, all or which are easy to put on.

Traditionally, plastic bands formed from a sheet of a plastics material have been used for such purposes. Details are printed on the plastic or placed on inserts sealed in pockets formed in the plastic sheet. However, modern printer technology is now widely available and enables fraudsters to quickly copy such bands. In addition, certain types of plastic sheet material can be warmed and manipulated to facilitate removal of the band without apparent damage, thereby facilitating undetected transfer of the band to another individual.

An alternative to a plastic band is a woven fabric band with an intricate pattern woven or sewn into it using threads of many different colours. Such bands are much more difficult to copy using commonly available technology and do not generally become more pliable on heating. Accordingly, a fabric wristband with a novel and detailed woven design provides a suitable band for use by the entertainment industry.

Such bands may be fastened using a compressible metal ring through which the band is threaded. In order to fasten the band, an official compresses the ring using a pair of plier-type hand or bench crushers.

### SUMMARY OF INVENTION

According to the present invention, there is provided a tamper evident fastening device suitable for use with a wristband, said device comprising a pair of members, a first member having a spike-like part, and a second member having spike-engaging means, characterized in that one or both of the spike-like part or the engaging means is frangibly connected to its respective member such that in use, when the spike-engaging means engages the spike-like part, such that the device is in a closed state, an attempt to open the closed device causes one (or both, where present) of the frangible connections to break, thereby providing evidence of tampering.

According to the above embodiment of the invention, there is provided an improved fastening device suitable for use with a wristband, particularly a fabric wristband, which makes the band easy to put on but difficult to remove or loosen without exhibiting evidence of tampering. The fastening device is also highly visible.

The pair of members are preferably connected. Preferably, the pair of members are connected via a hinge. Preferably, the hinge lies along one edge of the members. Preferably, the pair of members are plate-like. Preferably, in an open position, the hinged members are resiliently biased apart about the hinge. Thus, the device preferably resembles an open hinged shell or an open book. When in a closed position, the spike-engaging means and the spike-like part prevent the hinged members from springing apart.

Preferably, the spike-like part comprises a pin, tack or spear, preferably made from metal, for example, steel. Preferably, the spike-like part has one or more annular grooves adapted for engagement with the spike-engaging means. Preferably, this groove(s) is located towards the tip of the spike, distal to the connection point of the pin to its member. Preferably more than one groove is present on the spike-like part, for example, 1, 2, 3, 4, 5, 6, 7, 8, 9 or 10. Alternatively, the spike-like part has an arrowhead profile or barbed profile adapted for engagement with the spike-engaging means.

Preferably, the spike-like part is between 2mm and 20mm long, more preferably 3-10mm long, most preferably about 4mm long.

Preferably, the spike-like part has a cylindrical cross-section, which may be the same or different along its length.

Preferably, the spike-like part has a tack structure having a pin section and a sharpened tip section. Preferably, behind the tip is a section of the pin which contains one or more annular grooves. Preferably, the spike-like part has a smaller diameter proximate its connection to its member compared to towards its tip (not including the sharpened tip section). Preferably, the smallest diameter of the pin towards its end which is distal to the end connected to the member, including the annular grooves, but not including the sharpened tip, is larger than the diameter of the pin where it is attached to the base of the tack.

Preferably, the diameter of the tip of the spike-like part (not including the sharpened section of the tip) is in the range of 1-1.5 mm, more preferably 1.05-1.3mm, most preferably about 1.1mm. Preferably, the diameter at the base of the spike-like part is about 0.6-0.85mm, more preferably 0.7-0.8mm, most preferably, about 0.75mm. The change in diameter between the tip and base of the spike-like part may be stepped or continuous. This change in diameter is one way in which the spike-like part may be made frangible, as the spike-like part will break preferentially at its base. However, the tip is a larger diameter as this provides ease of machining of any annular grooves therein and better engagement with the spike-engaging means. The above diameter of the tip is also preferred in order to easily penetrate the band. In this embodiment, the spike-like part preferably has a tack structure, having a pin projecting from a circular base.

Thus, in a preferred embodiment, the spike-like part has a tack structure, having a base, a pin attached thereto and extending therefrom, the pin having a relatively narrow diameter at or adjacent the point it is attached to the base, a relatively larger diameter central pin section extending away from the base, an annular groove section towards the end of, but not at the tip of the pin, and a sharpened tip capable of penetrating the band.

The device of the present invention may have more than one spike-like part and spike-engaging means. In this embodiment, the spike-like part and spike-engaging means are presented in complimentary positions to one another on their respective member.

The spike-engagement means are preferably adapted to be locked to the spike-like part when the device is closed. Preferably, spike-engaging means and the spike-like part are self locking upon being engaged: that is they lock automatically upon closure. Preferably, the force required to disengage the locked spike-engaging means and the spike-like part is greater than that required to break the frangible connection(s). Preferably, the force required to break the frangible connection(s) is less than 90% that required to disengage the locked spike-engaging means and the spike-like part, more preferably less than 75%, more preferably less than 50%, for example, about 40%, 30%, 20% or 10%.

Preferably, when the device is closed, the spike-like part and/or the spike-engaging means is obscured so as to inhibit or prevent tampering. Preferably, the spike-like part and/or the spike-engaging means is obscured by the members and/or walls extending from the members, preferably extending from the periphery of the members.

The spike-engaging means preferably prevents or resists disengagement with the spike-like part. Preferably, the spike-engaging means comprises a star washer. Such a star washer comprises a plate, preferably a substantially circular plate, with a star or cross shape cut therein. This produces engagement means on the remaining material of the star washer which can engage with a groove(s), barb(s) or arrow head of the spike-like part. Preferably, a star washer is used in combination with a pin having annular grooves formed thereon. The vertices of material on the star washer can engage with the grooves on the pin. Preferably, the star washer is formed from a concave plate. This plate is preferably concave in relation to the pin, *i*.*e*., it is concave in relation to the direction of approach of the pin during closure of the device. This allows at least a portion of the pin to pass through the star washer and become engaged with the star washer. The concave nature of the washer plate means that the vertices of the star washer which engage with the grooves create an acute angle with the longitudinal axis of the pin, thereby inhibiting withdrawal of the pin from the washer.

The spike-engaging means is preferably made from steel, more preferably carbon steel or spring steel.

Preferably, the members are formed from one or more moulded plastic components. The plates are preferably connected along one edge by a hinge. The hinge may be a separate component to the plates or may be formed integrally therewith. In a preferred embodiment, the plates are moulded from a single piece of material and have an integrally moulded plastic hinge.
Preferably, the members are made from a different material to the spike-engaging means and the spike-like part.

The members are preferably made in whole or in part from plastic material including polyesters such as PET, nylon, acrylic such as PAN, polyolefins and the like. Other examples include aramid, polyesters, fluoropolymers, polyethers, polyurethanes and polyphenylene sulfides. Nylon is particularly preferred, specific examples being selected from the group consisting of polyhexamethylene adipamide (nylon 66), poly(butyrolactam) (nylon 4), poly(9-aminonoanoic acid) (nylon 9), poly(enantholactam) (nylon 7), poly(capryllactam) (nylon 8), polycaprolactam (nylon 6), poly(p-phenylene terephthalamide), polyhexamethylene sebacamide (nylon 6,10), polyaminoundecanamide (nylon 11), polydodecanolactam (nylon 12), polyhexamethylene isophthalamide, polyhexamethylene terephthalamide, polycaproamide, poly(nonamethylene azelamide (nylon 9,9), poly(decamethylene azelamide) (nylon 10,9), poly(decamethylene sebacamide) (nylon 10,10), and mixtures thereof. Nylon 6 is particularly preferred.

Preferably, the hinge is resilient, causing the plates to spring open if not securely closed or if one or both of the frangible connections are broken. This, perse, provides evidence that the device has been tampered with.

Preferably, the fastening device is luminous in whole or in part.

The present invention also provides a wristband comprising a strip of material and a fastening device. Preferably, the strip of material is a fabric material.

Preferably, each member has an aperture thereon, through which the wristband may be threaded. In the hinged embodiment, the aperture(s) is preferably adjacent to the hinge. In this embodiment, the apertures are preferably in face-to-face engagement with one another. Preferably, the wristband is threaded through both apertures and a closed loop is formed. This allows for the loop to be passed over the users hand (or other appendage) and the hinged member to be slid along the wristband, thereby contracting the loop around the wrist. The hinged members can then be closed. This allows the spike to penetrate and pass through the wristband and become engaged with the spike-engaging means. This locks the device and prevents the device being slid back along the wristband, such that a wearer cannot loosen or remove the band from their wrist without cutting the wristband, breaking the device, or otherwise producing evidence of tampering.

It has been found that persons wanting to remove known devices in the art will attempt to open the closed device in order the loosen or remove the wristband from a wearers wrist (or other appendage). This may be achieved by forcing the lock. For example, persons may try to pry the device apart. If sufficient force is applied, this can result in the spike-engaging means and the spike-like part becoming disengaged. However, in known devices, the device may be re-closed by merely re-engaging the spike-engaging means with the spike-like part. This allows what is intended to be a single use device to be reused, thereby circumventing the reasons for applying the wristband in the first place, *i*.*e*., security, proof of payment, etc.

In the present invention, an attempt to disengage the spike-engaging means with the spike-like part will preferentially result in the means by which the spike-engaging means and/or the spike-like part connect to their respective members being broken and disengaging therefrom, rather than resulting in the disengagement of the spike-engaging means and the spike-like part. As a result, the device cannot be re-closed *via* the same route as used to initially close the device. In this regard, the device may be adapted to spring open (as is the case when hinged plate members are used). This in itself provides evidence of tampering. Even if the user attempts to re-close the device by applying some adhesive material to the members or by weakening or breaking the hinge, tampering is evidence merely by pulling the wristband with sufficient force that the device will open.

Alternatively or additionally, tamper-evident means may be applied to the device. For example, the device may contain material which causes the wristband to be visibly marked if tampering is carried out. In such an embodiment, a closure containing a dye or coloured liquid may be incorporated in the device, such that the closure is ruptured during tampering, thereby causing the dye/coloured liquid to stain the wristband and/or device or to become visible in a window/aperture provided in one or more of the members of the device. Such dye/coloured liquid may be fluorescent, luminous or the like, thereby providing obvious evidence of tampering.

The spike-engaging means and/or the spike-like part are preferably frangibly connected to their respective members. This connection is preferably adapted so as not to be broken when the device is closed. Thus, the integrity of the spike-engaging means and or the spike-like part are not compromised during closure of the device.

The spike-engaging means and/or the spike-like part are preferably mounted on the frangible connecting means (hereinafter referred to as a 'support' or 'support structure') or are partially buried therein. For example, the spike-like part may comprise a tack structure (a substantially circular base with a pin projecting therefrom) which is adhered to a support structure housed within the device. Preferably, this support structure is attached to the inner face of one of the members. In this embodiment, the tack can be frangibly adhered to the support structure, for example, by an adhesive (preferably having a tensile strength which is less than that of the support structure), by melt attachment thereto or by integral moulding therewith. Alternatively or additionally, the support structure may be frangibly attached to the member. This frangibility may be achieved in numerous ways. For example, an adhesive having a pre-selected tensile strength may be used. Alternatively or additionally, the support structure may be machined, moulded, etched or mixtures of these, so as to have one or more points and/or lines of weakness. This point(s) of weakness and/or line(s) of weakness may be associated directly with the connection of the spike-engaging means or the spike-like part to their respective supports.

Alternatively, or additionally, the point(s) of weakness and/or line(s) of weakness may be associated directly with connection of the support(s) to their respective member(s). In a particularly preferred embodiment, the tack has its base covered (partially or wholly) with a thin film of plastic which bonds the tack to the support structure. The pin of the tack emerges through and/or projects away from the film. The film is preferably 0.0005-0.1 mm thick, preferably 0.001-0.01 mm, preferably 0.002-0.005 mm preferably about 0.02 mm thick.

In a preferred embodiment, the base of the tack is set in the member such that the thickness of the member at the point of attachment is 0.035-0.065mm, preferably 0.045-0.055mm and most preferably about 0.05mm thick. In this embodiment, the member is preferably plastic, most preferably Nylon 6. This means that in the area that the base of the tack is connected to the member, the member is relatively thinned compared to the adjacent area and/or the average thickness of the member. In this regard, the average thickness of the member is greater than 0.2mm, more preferably greater than 0.4mm, more preferably greater than 0.5 mm, for example, between 0.75mm and 2.5mm. This provides a point of weakness which not only produces the frangible connection, but also allows for the thinned area of plastic to be pulled away from the member, thereby creating a hole in the member, hence providing evidence of tampering.

The relatively thin area of the member may be created by having a recessed spike-like part (such as a tack), or the member may simply be moulded to have a relatively thin area which is continuous with the inner surface of the member. Preferably, the relatively thin area of the member is approximately the same area and shape as the base of the tack, most preferably substantially the same area and shape.

In this embodiment, it is possible for the tack not only to be pulled away from the support structure during tampering, but also for the tack to pull some of the support structure with it, thereby creating a hole in one or more of the members, thereby providing further evidence of tampering. In this embodiment, the distance between the bottom face of the tack and the outside surface of the member is preferably 0.0005-1 mm thick, preferably 0.001-0.1 mm, preferably 0.002-0.005 mm preferably about 0.002 mm thick.

In a further embodiment, the spike-engaging means and/or the spike-like part may be applied to the members during moulding of the device. This allows for these components to become adhered to, or partially submerged in, the moulded material of the one or more members. The manufacturing process can be controlled or the product be machined in order to ensure that the resultant spike-engaging means and/or the spike-like part are frangibly connected to their respective member(s). Such machining may be carried out via a conventional process such as drilling, cutting, laser ablation, chemical etching, uv ablation, and the like.

Preferably, the force required to break or disengage the spike-engaging means and the spike-like part is in excess of the force required to break frangible connection(s).

Preferably, the force required to break or disengage the spike-engaging means and the spike-like part is in excess of 50 Newtons (N), more preferably, in excess of 75N, more preferably, in excess of 100N, for example in excess of 150, 200, 400, 600 or 1000N.

Preferably, the force required to break frangible connection(s) is less than 500N, more preferably, less than 250N, more preferably, less than 200N, for example less than 150, 100, 75 or 50N. Preferably, the difference between the force required to break/disengage the spike-engaging means and the spike-like part, and the force required to break the frangible connections is at least 10N, preferably greater than 25N, preferably greater than 50N, preferably greater than 100N.

Preferably, it is intended that all of the above force values required to break or disengage the spike-engaging means and the spike-like part may be combined with any of the force values given for breakage of the frangible connection(s), as long as the force required to break or disengage the spike-engaging means and the spike-like part is in excess of the force required to break frangible connection(s).

Each frangible connection (where more than one is present) may require the same or different force to break the frangible connection(s).

The tamper evident fastening device of the present invention may be provided with an additional locking or securing means which prevents the frangible connections being accidentally broken in normal use. Such locking or securing means could be actuated by a user. Upon placing the device on a wrist (or the like), the device could be closed (with the engagement of the spike-engaging means and the spike-like part), and then the additional locking or securing means could be closed to prevent the frangible connections accidentally being broken. While the additional locking or securing means may be opened or re-closed by the user, the device could not be removed without showing evidence of tampering, as this would require breakage of the frangible connection(s). Such additional locking or securing means could be in the form of a clasp.

The present device may have more than one frangible connection associated with either the spike-like part, the spike-engaging means, or both. For example, the spike-like part and/or the spike-engaging means may be attached to its respective member by a single frangible connection, or a plurality thereof, such as 2, 3, 4, 5 or 6 such connections. Preferably, when there is an attempt to open the closed device, all of the frangible connections associated with either the spike-like part or the spike-engaging means, or both, are caused to break, thereby providing evidence of tampering. Therefore, breakage of all of the frangible connections associated with either the spike-like part and/or the spike-engaging means that one or both of these becomes completely detached from its respective member.

In a particularly preferred embodiment of the present invention, the device of the present invention may contain a Radio-frequency identification (RFID) tag. RFID uses an object (referred to herein as a tag) incorporated into the device of the present invention for the purpose of identification and/or tracking using radio waves.

The RFID tags of the present invention preferably contain at least two parts. The first is an integrated circuit for storing and processing information, modulating and demodulating a radio-frequency (RF) signal, and other specialized functions. The second is an antenna for receiving and transmitting the signal.

There are generally three types of RFID tags which may be used with the device of the present invention: active RFID tags, which contain a battery and can transmit signals autonomously, passive RFID tags, which have no battery and require an external source to provoke signal transmission, and battery assisted passive (BAP) which require an external source to wake up but have significant higher forward link capability providing great read range.

The RFID tags used in the device of the present invention may be adapted to discontinue operating (i.e., break and/or stop transmitting signals) when an attempt is made to open the closed device. Thus, breaking one or both of the frangible connections also causes the RFID tag to discontinue operating. This provides further evidence of tampering as a person will be able to scan the tag and immediately establish whether the tag has been broken or not. This provides an added layer of security as a user might have tried to conceal visible evidence of tampering with the device.

The RFID tag may be fixed to the device of the present invention by attaching it to the spike-like part and/or the spike engaging means such that a part of the RFID tag is broken when the closed device is forced apart or there is an attempt to force the spike-like part and the spike engaging meansapart. For example, the antenna of the RFID tag may be attached to both the spike engaging means and the material surrounding the spike engaging means, such that breaking the frangible connection between the spike engaging means and its surrounding material also causes breakage of the antenna, thereby precluding further transmission. Alternatively, the integrated circuit and the antenna may be attached to different respective members of the device. Thus, when the device is forced open, the connection between the integrated circuit and the antenna is severed, thereby precluding further transmission

Specific embodiments of the invention will now be described by way of example with reference to the accompanying drawings in which:
Figure 1 is a side view of a fastening device according to one embodiment of the present invention.
Figure 2 is a partial cross-sectional view end view of the fastening device shown in Figure 1.
Figure 3 is a perspective view of an assembled fastening device according to one embodiment of the present invention.
Figure 4 is a perspective view of an assembled fastening device where the pin has sheared away from its base, thereby providing evidence of tampering.
Figure 5 is a perspective view of an assembled fastening wherein the base of the pin has sheared away from the member and removed some of the member material.

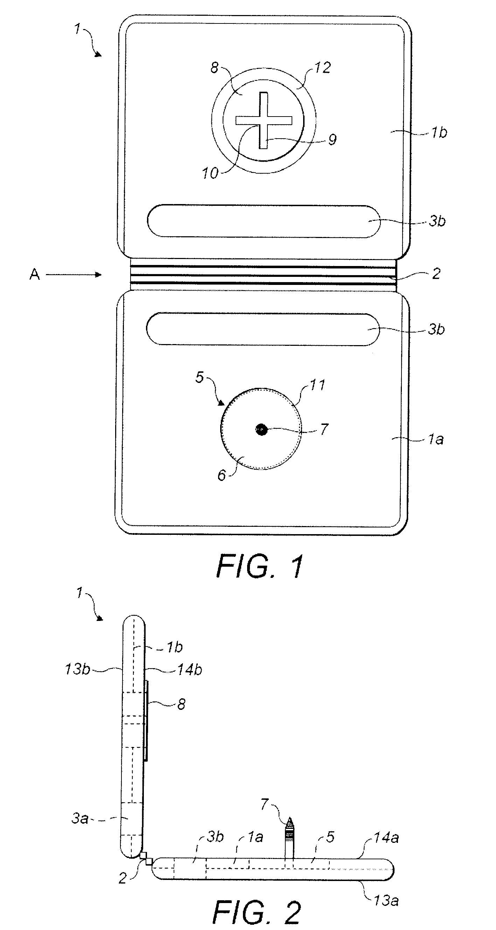

In one embodiment, shown in Figure 1, the fastening device 1 is shown in a flat open position. The fastening device 1 comprises a plastic molded casing having a first member 1 a and a second member 1 b connected via an integrally molded hinge 2. The members 1 a and 1 b are pivotally connected about the hinge 2 and can be brought into face-to-face registration with one another. Members 1 a and 1 b each have an elongated aperture 3a, 3b formed therein. Which, upon closure of the fastening device are also in face-to-face registration. A strip of material 4 (not shown in Figure 1) may be passed through apertures 3a, 3b and fastened to form a loop

The strip of material 4 may be taken from a plastic sheet, that is preferably a woven material. The strip may be marked in such a way that it is difficult to copy. Alternatively, the strip may be impregnated with a material (such as a magnetic material) which allows easy identification thereof.

The fastening device 1 is adapted so that it can slide along the strip of material 4 so as to make the loop smaller.

Member 1 a has a tack 5 molded to the surface thereof. The tack comprises a circular base 6 and a pin 7. The pin 7 extends out of the face of member 1 a, such that when members 1 a and 1 b are brought into face-to-face registration with one another about the hinge 2, pin 7 engages with star washer 8. Star washer 8 has a cross-like aperture 9 cut therein. Pin 7 has a plurality of annular grooves 7a cut in the end portion thereof (the end distal to the face of member 1 a). Upon passing through aperture 9, pin 7 engages with the vertices 10 as it passes therethrough. As the star washer 8 is concave, the pin 7 passes easily through aperture 9 upon closure of the device. However, the pin 7 resists extraction from the star washer because of the engagement of the vertices 10 with one or more of the annular grooves 7a formed thereon.

At the periphery of the circular base of the tack 5, a portion of the molded material of 1 a has been machined away to form a line of weakness 11. When excessive force is used to separate the closed fastening device, for example, by trying to prise the faces of members 1 a and 1 b apart, the line of weakness 11 breaks preferentially to the pin 7 being withdrawn from the star washer 8.

The star washer 8 is adhered to the member 1 b via an annular periphery 12 thereof.
Figure 2 shows a partial cross-sectional view of a partial closed fastening device according to Figure 1. The fastening device in Figure 2 is viewed down axis A shown in Figure 1. In this view it can be seen that members 1 a and 1 b respectively comprise a plate-like face 13a, 13b and peripheral walls 14a and 14b. These walls allow for the pin and the star washer to be recessed within the closed device. The tack 5 and the star washer 8 are bonded to surfaces 13a and 13b respectively.

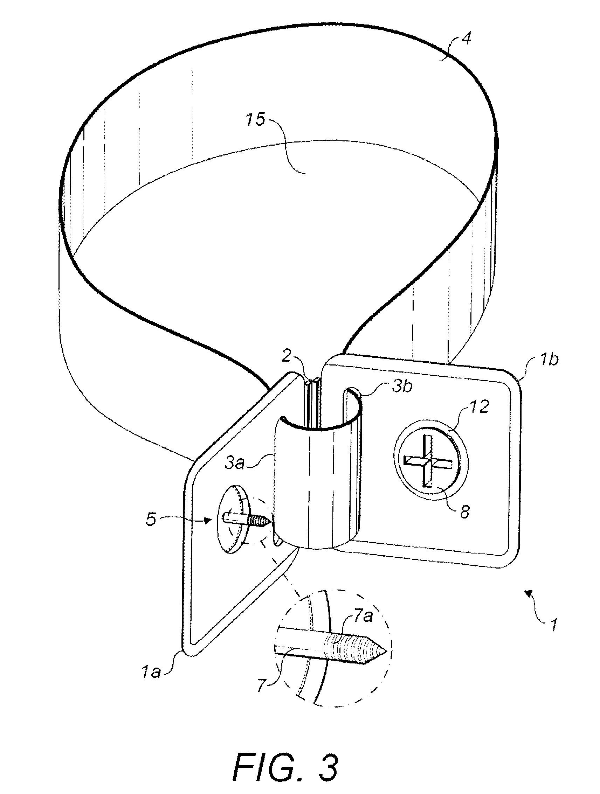

Figure 3 is a perspective of the fastening device with a strip of material 4 threaded through apertures 3a and 3b. In this preferred embodiment, the pin 7 has a point of weakness at its base. This is because at the base of the pin, its diameter is 0.75 mm compared to 1.1 mm at its tip. This creates a point of weakness 16 which allows the pin 7 to be sheared from its base 6.
   To use the wristband 4, a wearer slides on of his hands through the loop 15. The portion of the wristband which passes between apertures 3a and 3b can then be grasped and then pulled through apertures 3a and 3b in order to constrict the loop 15.
   When the loop 15 is closed around the wearer's wrist, members 1a and 1 b may be closed, thereby forcing pin 7 through the wristband and into engagement with star washer 8. The wristband cannot now be loosened without breaking the frangible connections of the tack 5 to the face 13a of member 1 a. Upon fracture of the frangible connection the members 1 a and 1 b spring away from one another under the biasing force of hinge 2, thereby evidencing tampering therewith.

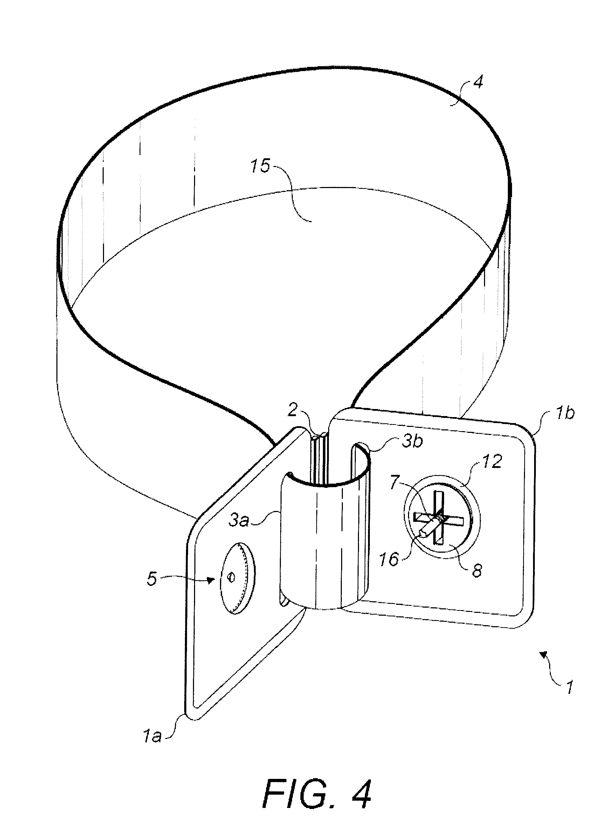

Figure 4 shows one preferred embodiment where the tack 5 comprises a circular base 6 and a pin 7. The pin 7 has been shown to have sheared away from the base 6. This is because at the base of the pin, its diameter is 0.75 mm compared to 1.1 mm towards its tip. This creates a point of weakness 16 which allows the pin 7 to be sheared from its base 6 and retained in the star washer aperture 9 by its annular grooves 7a.

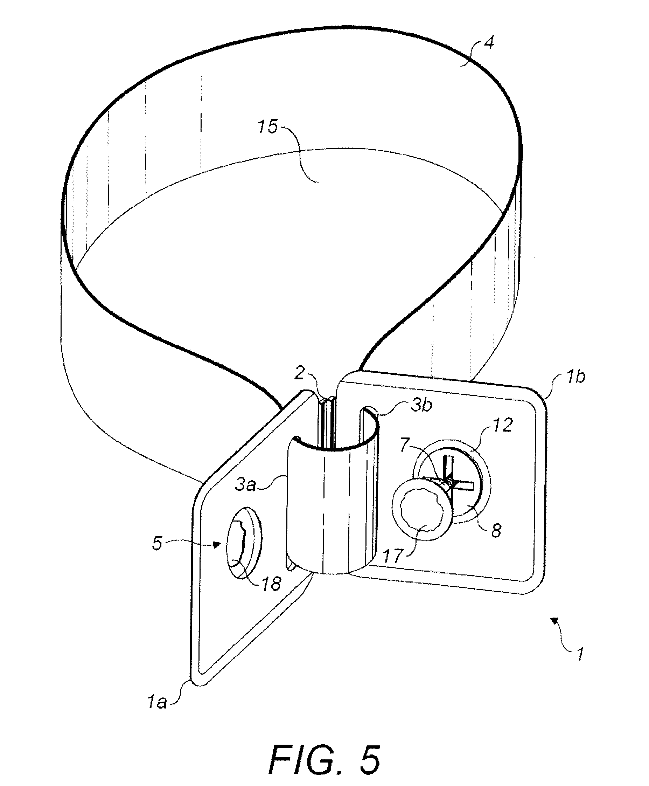

Figure 5 shows a similar embodiment to that shown in Figure 4. However, in this embodiment, the tack 5 has been pulled away from the member 1 a, along with some of the plastic material 17 of the member 1a. The plastic material 17 is about 0.05 mm thick. This leaves an obvious hole 18 in the member. The back-side of the member 1 a may be provided with printing, thereby emphasizing when a hole is created therein. For ease of viewing, neither of Figures 4 or 5 show the band having been pulled through the device and penetrated by the pin 7.
   The fastening device has been described particularly in the context of wristbands but it can clearly be used for other purposes, such as ankle bands or pet collars.
   Although one skilled in the art will readily conceive of many alternative embodiments of the invention described above, the present invention includes all such alternatives which fall within the scope of the following claims.

## Claims

1. A tamper evident fastening device suitable for use with a wristband, said device comprising a pair of members, a first member having a spike-like part, and a second member having spike-engaging means, **characterized in that** one or both of the spike-like part or the spike-engaging means is frangibly connected to its respective member such that in use, when the spike-engaging means engages the spike-like part, such that the device is in a closed state, an attempt to open the closed device causes one or both of the frangible connections to break, thereby providing evidence of tampering.

2. A device according to claims 1, wherein the pair of members are connected *via* a hinge.

3. A device according to claims 1 or claim 2, wherein the hinged members are resiliently biased apart.

4. A device according to any preceding claim, wherein the spike-engagement means are locked to the spike-like part when the device is closed, preferably self locking upon being engaged.

5. A device according to any preceding claim, wherein the force required to disengage the locked spike-engaging means and the spike-like part is greater than that required to break the frangible connection(s).

6. A device according to any preceding claim, wherein the force required to break the frangible connection(s) is less than 90% that required to disengage the locked spike-engaging means and the spike-like part, more preferably less than 75%, more preferably less than 50%.

7. A device according to any preceding claim, wherein the spike-engaging means comprises a star washer.

8. A device according to any preceding claim, wherein the spike-like part has annular grooves formed thereon.

9. A device according to any preceding claim, wherein the members are formed from one or more moulded plastic components.

10. A device according to any preceding claim, wherein each member has an aperture thereon, through which the wristband may be threaded.

11. A device according to any preceding claim, wherein it comprises a Radio-frequency identification (RFID) tag.

12. A device according to claim 11, wherein the RFID tag discontinues operating when an attempt is made to open the closed device.
